# EUROPÄISCHE PATENTSCHRIFT

(11) **EP 1 738 450 B1**
(45) Veröffentlichungstag und Bekanntmachung des Hinweises auf die Patenterteilung: **15.07.2009**
(21) Anmeldenummer: 06723762.8
(22) Anmeldetag: 27.03.2006
(51) Int. Cl.: H02K 3/52, H02K 11/00

(54) **ELEKTRONISCH KOMMUTIERTER ELEKTROMOTOR, UND VERFAHREN ZU SEINER HERSTELLUNG**
ELECTRONICALLY COMMUTED ELECTRIC MOTOR AND METHOD FOR PRODUCTION THEREOF
MOTEUR ELECTRIQUE A COMMUTATION ELECTRONIQUE ET SON PROCEDE DE PRODUCTION

(30) Priorität: 20.05.2005 DE 102005024770
(43) Veröffentlichungstag der Anmeldung: 03.01.2007
(73) Patentinhaber: ebm-papst St. Georgen GmbH & Co. KG, 78112 St. Georgen (DE)
(72) Erfinder: SEIDLER, Siegfried, 78056 Villingen-Schwenningen (DE); NICKEL-JETTER, Matthias, 78054 Villingen-Schwenningen (DE)
(74) Vertreter: Raible, Tobias
(86) Internationale Anmeldenummer: PCT/EP2006/002785
(87) Internationale Veröffentlichungsnummer: WO 2006/122604

(56) Entgegenhaltungen:
- US-A- 5 034 643
- US-A- 5 343 104
- PATENT ABSTRACTS OF JAPAN Bd. 2003, Nr. 10, 8. Oktober 2003 (2003-10-08) -& JP 2003 180047 A (ASMO CO LTD), 27. Juni 2003 (2003-06-27)
- PATENT ABSTRACTS OF JAPAN Bd. 2003, Nr. 12, 5. Dezember 2003 (2003-12-05) -& JP 2004 208446 A (MITSUBISHI ELECTRIC CORP), 22. Juli 2004 (2004-07-22)

## Beschreibung

Die Erfindung betrifft einen elektronisch kommutierten Elektromotor, insbesondere einen Kleinstmotor, und ein Verfahren zu seiner Herstellung.

Kleinstmotoren dienen u.a. zum Antrieb von Minilüftern. Letztere dienen z.B. zur Kühlung von Prozessoren in Computern, zur Gerätekühlung bei kleinen Geräten, etc., und sie haben sehr kleine Abmessungen. Z.B. haben
- die Lüfter der ebm-papst-Serie 250 Abmessungen von 8 x 25 x 25 mm,
- die der ebm-papst-Serie 400F Abmessungen von 10 x 40 x 40 mm,
- die der ebm-papst-Serie 400 von 20 x 40 x 40 mm,
- und die Lüfter der ebm-papst-Serie 600 von 25 x 60 x 60 mm.

Die Leistungsaufnahme solcher Lüfter liegt bei der Serie 250 bei 0,2 ... 0,6 W, bei der Serie 400F bei 0,6...0,9 W, und bei den Serien 400 und 600 bei 0,4...3,0 W. Das Gewicht beträgt z.B. bei der Serie 250 etwa 5 (fünf) Gramm, bei der Serie 400/400F zwischen 17 und 27 g, und bei der Serie 600 beträgt es etwa 85 g.

Bei Motoren dieser Miniaturgröße, die sehr preiswert sein müssen, ist es wichtig, die Montage so einfach wie möglich zu machen, damit bei der Herstellung ein möglichst hoher Automatisierungsgrad möglich wird. Nur eine weitgehende Automatisierung der Fertigung ermöglicht eine gleichmäßige Qualität, wie sie für eine hohe durchschnittliche Lebensdauer Voraussetzung ist.

Bei solchen Kleinstmotoren kommt erschwerend hinzu, dass ihre Bauteile, durchaus vergleichbar mit denen eines mechanischen Uhrwerks, sehr zierlich und deshalb wenig robust sind. Die Rotorwelle hat z.B. oft nur die Dicke einer Stricknadel und kann deshalb bei sorglosem Umgang leicht verbogen werden, wodurch der Motor unbrauchbar wird. Diese Gefahr besteht besonders während der Montage.

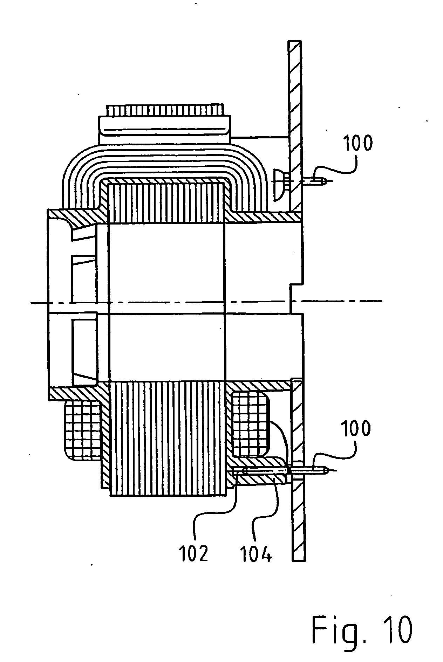

Bei solchen sehr kleinen Motoren ist eine automatisierte Fertigung schwierig und erfordert oft zusätzliche Handarbeit. Dies gilt vor allem für die Verbindung von Elementen der auf dem Statorblechpaket angeordneten Wicklungsanordnung mit der zugeordneten Leiterplatte. Wie die nachfolgende Fig. 10 zeigt, verwendet man hierfür bislang Metallstifte, welche in einer Isolierung befestigt sind, die sich auf dem Statorblechpaket befindet. Solche Stifte werden in einem separaten Arbeitsgang in Löcher im Kunststoff des umspritzten Blechpakets eingepresst. Man nennt sie "Autosplice-Stifte".

Ein solcher Metallstift wird mit einem Drahtende der Wicklungsanordnung des Motors umwickelt, durch eine Ausnehmung in die Leiterplatte eingeführt, und dann mit dieser verlötet. Dieses Verfahren hat jedoch seine Grenzen bei einem maximalen Drahtdurchmesser von etwa 0,24 mm, weil sich bei dickeren Drähten ein solcher Stift verbiegt, bzw. die Bohrung im Isolierstoff des umspritzten Blechpakets aufgeweitet und zerstört wird.

In solchen Fällen ist es dann z.B. möglich, den Kupferlackdraht von Hand auf Lötpads der Leiterplatte anzulöten. Bei einem anderen Verfahren werden so genannte Schneidklemmkontakte verwendet, doch muss dafür der Drahtdurchmesser größer als etwa 0,17 mm sein.

JP 2003 180047 offenbart einen Elektromotor mit den Merkmalen des Oberbegriffs des Anspruchs 1.

Es ist eine Aufgabe der Erfindung, einen neuen Elektromotor und ein neues Verfahren zu seiner Herstellung bereit zu stellen.

Nach der Erfindung wird diese Aufgabe gelöst durch ein Verfahren gemäß Anspruch 1. Hierbei benötigt man keine Metallstifte, die man zuvor in die Isolationsschicht einpressen muss, sondern stattdessen wird ein aus Kunststoff beim Spritzvorgang hergestelltes Befestigungsteil verwendet, an dem ein Drahtabschnitt der Wicklung in geeigneter Weise befestigt wird, und die Kombination von Kunststoff-Befestigungsteil und Drahtabschnitt wird dann durch eine zugeordnete Ausnehmung der Leiterplatte durchgesteckt und anschließend mit dieser verlötet.

Eine andere Lösung der gestellten Aufgabe ist Gegenstand des Anspruchs 11. Da bei einem solchen Motor die Autosplice-Stifte entfallen, ergibt sich eine wesentlich vereinfachte und damit verbilligte Herstellung, verbunden mit weniger Ausschuss. Ein Drahtabschnitt kann mit dem zugeordneten Kunststoff-Befestigungsteil z.B. dadurch verbunden werden, dass es auf diesen aufgewickelt wird. Alternativ kann man, besonders bei dickeren Drähten, der Drahtabschnitt in dem zugeordneten Kunststoff-Befestigungsteil zumindest vorübergehend mechanisch befestigen, z.B. durch Einpressen in eine Nut, die in diesem Kunststoff-Befestigungsteil vorgesehen ist, durch Kleben, oder in sonstiger Weise.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine teilweise Schnittdarstellung eines Innenstators für einen erfindungsgemäßen Motor bzw. ein erfindungsgemäßes Verfahren, vor dem Bewickeln des Innenstators,
- Fig. 2: eine Darstellung analog Fig. 1 nach dem Bewickeln,
- Fig. 3: die Statoranordnung nach Fig. 1 oder 2, bei welcher ein Kunststoff-Befestigungsteil zusammen mit einem auf es aufgewickelten Drahtabschnitt in eine Ausnehmung einer Leiterplatte eingeführt ist; in Fig. 3 ist ein Teil eines Außenrotors mit strichpunktierten Linien angedeutet,
- Fig. 4: einen Schnitt, gesehen längs der Linie IV - IV der Fig. 5A; in dieser Darstellung sind insgesamt drei Kunststoff-Befestigungsteile sichtbar, welche in zugeordnete Ausnehmungen einer Leiterplatte ragen und dort verlötet sind,
- Fig. 5A: eine Draufsicht auf das Statorblechpaket der Fig. 1 bis 4, welches mit einer Kunststoffschicht umspritzt ist, auf welche eine so genannte bifilare Wicklung gewickelt ist, deren Anschlüsse mit zugeordneten Kunststoff-Befestigungsteilen verbunden sind,
- Fig. 5B: die zugeordnete Leiterplatte im Zustand vor ihrer Montage,
- Fig. 6: ein Statorblechpaket analog Fig. 5A in seinem Zustand vor der Bewicklung,
- Fig. 7: einen Schnitt, gesehen längs der Linie VII - VII der Fig. 6,
- Fig. 8: eine stark vergrößerte Darstellung eines Künststoff-Befestigungsteils, das mit einer Längsnut versehen ist, sowie eines an dieser Längsnut durch Einklemmen befestigten Drahtabschnitts der Wicklungsanordnung,
- Fig. 9: einen Schnitt, gesehen längs der Linie IX-IX der Fig. 8, und
- Fig. 10: einen Schnitt analog Fig. 4 durch den Innenstator eines Motors nach dem Stand der Technik.

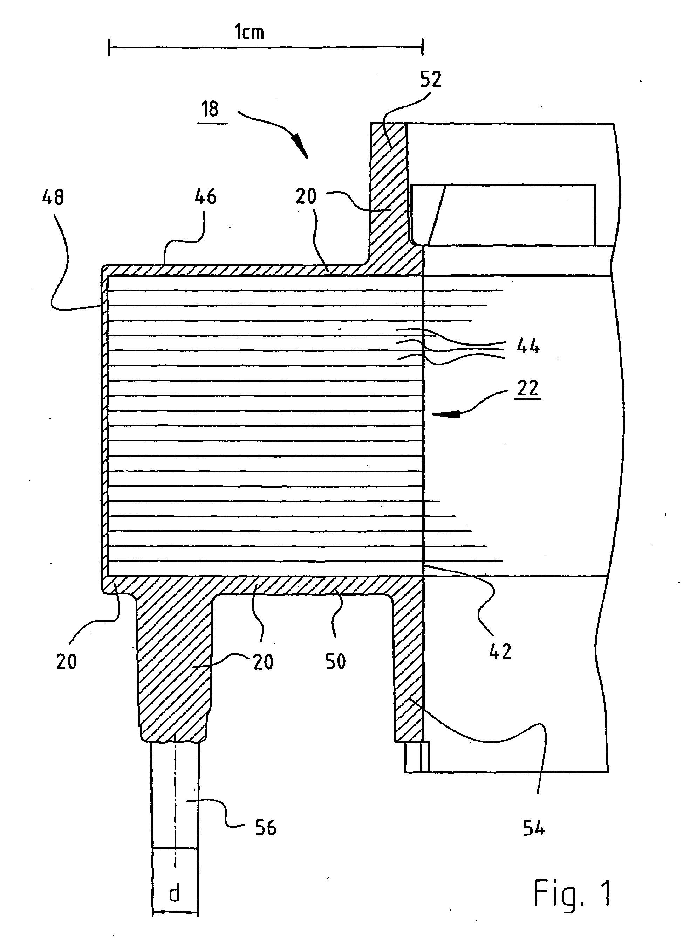

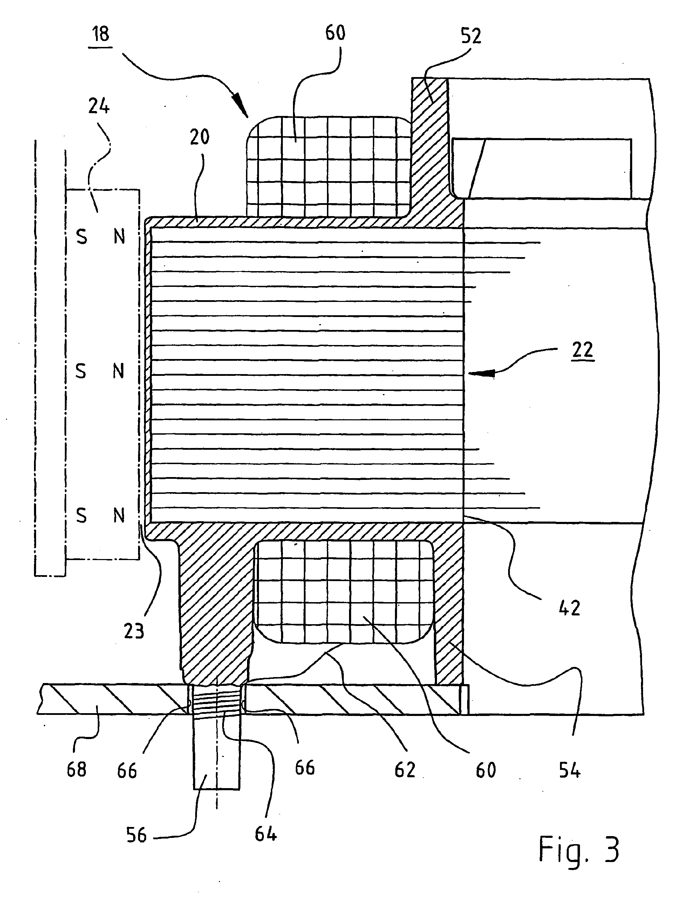

Fig. 1 zeigt in sehr stark vergrößertem Maßstab das mit einer Kunststoffschicht 20 umspritzte Statorblechpaket 22 eines Innenstators 18 für einen Außenläufer-Kleinstmotor, dessen Rotormagnetring 24 in Fig. 3 strichpunktiert angedeutet ist. Dieser ist durch einen Luftspalt 23 vom Blechpaket 22 getrennt.

Zur Illustration der Größenordnung ist in Fig. 1 in der üblichen Weise die Länge von 1 cm angegeben, d.h. das dargestellte Blechpaket 22 kann beispielsweise die Höhe von etwa einem Zentimeter haben. Eine starke Vergrößerung ist notwendig, um Einzelheiten überhaupt darstellen zu können.

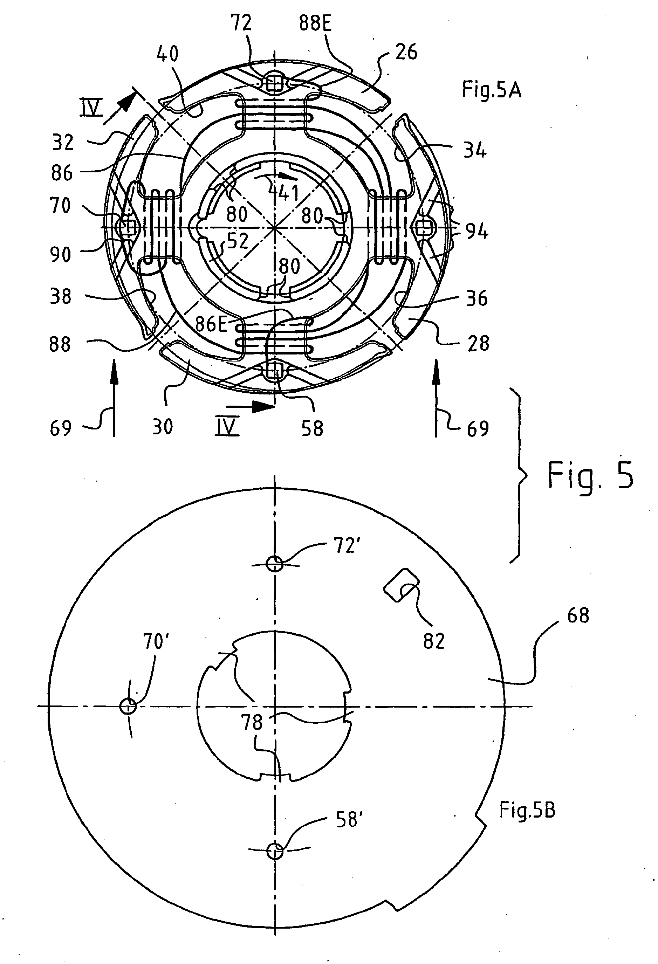

Die Form des beispielhaft dargestellten Blechpakets 22 ergibt sich aus Fig. 5A. Diese Form hat vier ausgeprägte Pole 26, 28, 30, 32, zwischen denen sich Nuten 34, 36, 38 und 40 befinden. Die Pole sind an ihrer Peripherie so ausgebildet, dass sie im Betrieb ein so genanntes Reluktanzmoment erzeugen. In Fig. 5A dreht sich der (dort nicht dargestellte) Rotor 24 im Uhrzeigersinn 41.

Da das Blechpaket 22 vier ausgeprägte Pole hat, ist bei der dargestellten Variante auch der Rotormagnetring 24 vierpolig magnetisiert. Naturgemäß kann man für Stator 22 und Rotor 24 auch andere Polzahlen verwenden, z.B. eine Version mit zwei Statorpolen und zwei Rotorpolen. Ebenso wäre statt der in Fig. 5A dargestellten zweisträngigen Wicklung z.B. auch eine Wicklung mit nur einem Strang, oder eine dreisträngige Wicklung, möglich.

Das Blechpaket 22 hat auf seiner Innenseite eine Ausnehmung 42, die zur Befestigung dient, z.B. auf einem nicht dargestellten Lagerrohr. Das Blechpaket 22 ist in der üblichen Weise aus Einzelblechen 44 aufgebaut, und es ist mit der Kunststoffschicht 20 auf seiner Oberseite 46, auf seiner äußeren Peripherie 48 und auf seiner Unterseite 50 umspritzt.

An ihrer Oberseite geht die Kunststoffschicht 20 über in einen Kragen 52, an ihrer Unterseite in einen Kragen 54, und sie ist auf ihrer Unterseite mit Kunststoff-Befestigungsteilen 56 versehen, die in Fig. 1 bis 3 nach unten ragen. Diese haben etwa die Form eines Stifts oder Pfostens und haben bei dem dargestellten Beispiel einen quadratischen Querschnitt mit einer Kantenlänge d von etwa 1,5 mm. Alternativ sind auch andere längliche Formen möglich, z.B. die eines Zylinders mit einem Durchmesser von etwa 1 mm, der auch leicht konisch sein kann.

Als Kunststoff für die Schicht 20, die beiden Kragen 52, 54 und die Kunststoff-Befestigungsteile 56 wird bevorzugt ein hochfester und hochtemperaturbeständiger Kunststoff verwendet, z.B. ein flüssigkristallines Polymer, dem zur Erhöhung der Festigkeit und zur Reduzierung der Anisotropie Glasfasern beigemengt sind. Ein solches Polymer wird unter der Marke TICONA angeboten, z.B. Typ "VECTRA T 135". Ein solcher Kunststoff hat ein Biegemoment von ca. 16.000 MPa, und eine Temperaturbeständigkeit unter Last (HDT(A) gemäß ISO 75-1,2 bei 1,8 MPa) von ca. 300° C. Diese Temperatur kann kurzzeitig überschritten werden, z.B. bis zu 370° C, ohne dass dieser Kunststoff schmilzt.

Diese Art von Kunststoff wird auch als LCP bezeichnet. Es handelt sich dabei um thermotrope, also in der Schmelze verarbeitbare flüssigkristalline Polymere (Liquid Crystalline Polymers = LCP) mit sehr hoher Temperaturbeständigkeit. Charakteristisch ist ihr molekularer Aufbau. Diese Polymere bestehen aus starren, stabförmigen Makromolekülen, die sich in der Schmelze parallelisieren und flüssigkristalline Strukturen bilden. Unterwirft man diese Polymerschmelze einer Scher- oder Dehnströmung, z. B. beim Spritzgießen, dann ordnen sich die starren Makromoleküle zu Fasern und Fibrillen. Diese werden beim Abkühlen "eingefroren". Dadurch ergibt sich die spezifische Morphologie der flüssigkristallinen Polymere in deren festem Zustand, und diese ist der Morphologie von Holz nicht unähnlich. In der Matrix des LCP sind dabei Fasern aus dem gleichen Polymer eingelagert.

Man bezeichnet solche Polymere deshalb auch als "selbstverstärkende Polymere". Die starre, stabförmige Polymerstruktur führt im Gegensatz zu der von konventionellen thermoplastischen Polymeren bekannten amorphen Struktur zu einer erheblichen Verbesserung der mechanischen Eigenschaften und einigen weiteren ungewöhnlichen Eigenschaften, nämlich einer Dauergebrauchstemperatur bis zu 300° C, einer Schmelztemperatur bis zu 370° C, einer sehr hohen Zugfestigkeit und einem hohen E-Modul in Fließrichtung, und einer hohen Schlagzähigkeit.

Zugfestigkeit, Steifigkeit und Zähigkeit ergeben in Fließrichtung umso höhere Werte, je stärker die Schmelze in eine Richtung orientiert ist. Dünne Teile haben deshalb eine besonders ausgeprägte Anisotropie. Diese kann bis zu einem gewissen Grad, z. B. um 50 %, dadurch reduziert werden, dass man dem Polymer Glasfasern beimengt. Trotzdem bleiben hierbei die positiven Materialeigenschaften weitgehend erhalten, z. B. die niedrige Viskosität im geschmolzenen Zustand, die eine besonders einfache Verarbeitung ermöglicht.

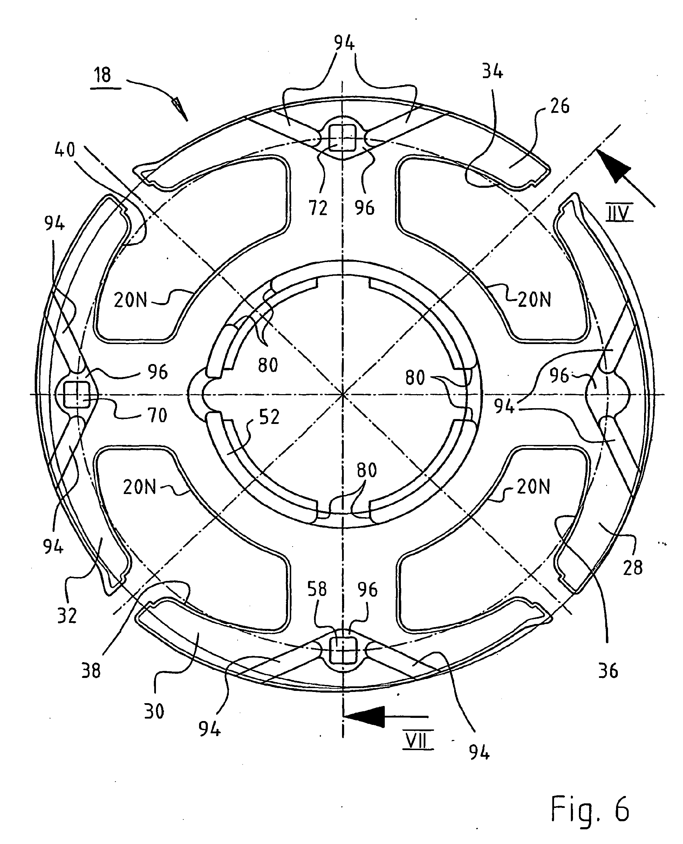

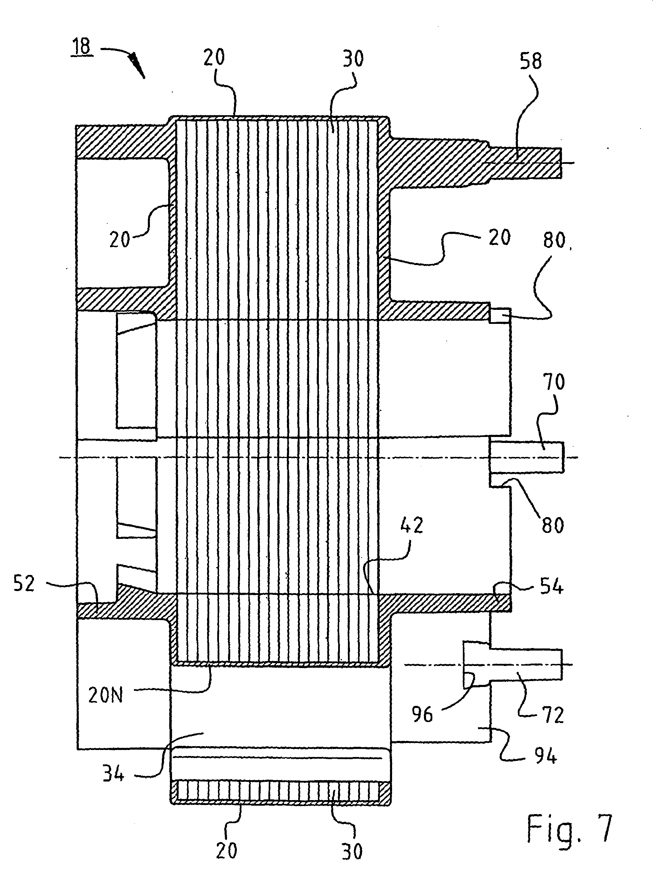

Sehr vorteilhaft ist, dass mit einem solchen Kunststoff sehr dünne Kunststoffschichten erzeugt werden können, z.B. von 0,2 mm, da er im geschmolzenen Zustand sehr dünnflüssig ist und eine Viskosität hat, die ähnlich klein ist wie die von Wasser. Dies ermöglicht eine sehr dünne Nutisolierung 20N, vgl. die Fig. 6 und 7, so dass nach dem Umspritzen des Blechpakets 22 in den Nuten 34, 36, 38, 40 mehr Wickelraum zur Verfügung steht als bei Verwendung von Kunststoffen mit höherer Schmelzviskosität, so dass dort eine größere Zahl von Windungen untergebracht werden kann (größerer Kupferfüllfaktor), was eine höhere Leistung des Motors ermöglicht. Auch kann an der Peripherie 48 des Blechpakets 22 ebenfalls eine durchgehende Kunststoffschicht von z.B. 0,2 mm Dicke vorgesehen werden, ohne dass deshalb der Luftspalt 23 vergrößert werden muss. Das erweist sich besonders bei Motoren für die Schutzart IP54 und bei Motoren, die gegen Salznebel geschützt werden müssen (z.B. für Verwendung auf Schiffen), als großer Vorteil.

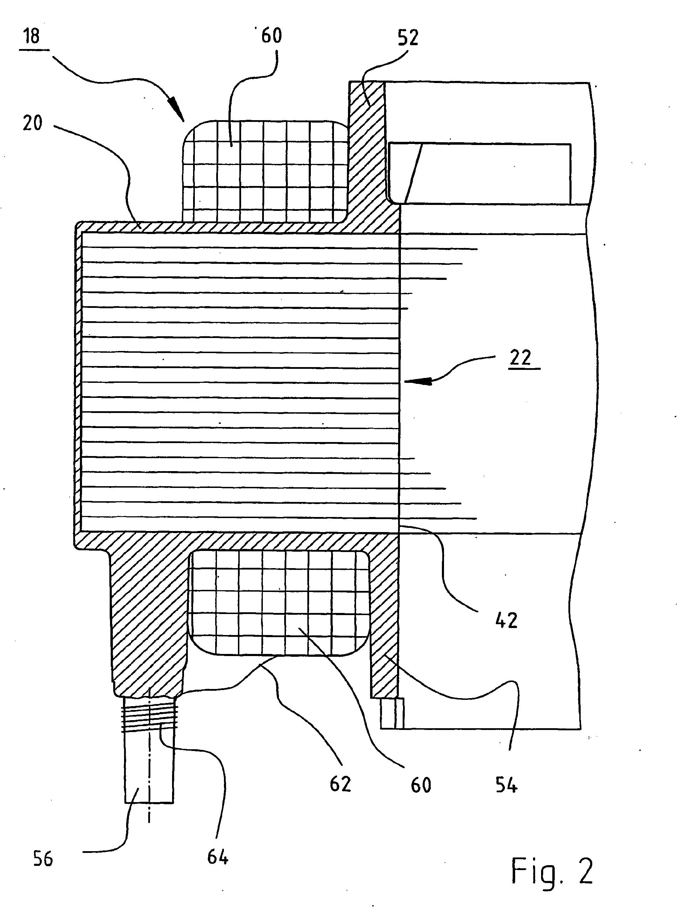

**Fig. 2** zeigt das Blechpaket 22 der Fig. 1, auf das eine Wicklung 60 aus Kupferlackdraht gewickelt wurde, wobei die Kunststoffteile 20, 52, 54 einen Wickelkörper bilden.

Die Wicklung 60 hat einen Anschlussdraht 62, und dieser ist in Form einer kleinen Wicklung 64 um das Kunststoff-Befestigungsteil 56 herum gewickelt. Diese kleine Wicklung 64 kann in manchen Fällen durch Eintauchen in ein Zinnbad verzinnt werden, wobei gleichzeitig die Belackung des Drahts 62 abbrennt

Gemäß **Fig. 3** wird anschließend das Kunststoff-Befestigungsteil 56 mit der Wicklung 64 in eine Ausnehmung 66 einer Leiterplatte 68 eingeführt, und anschließend wird die Leiterplatte 68 in der üblichen Weise verlötet, wobei die Wicklung 64 durch das Lötzinn mit einer der (nicht dargestellten) Leiterbahnen auf der Leiterplatte 68 elektrisch verbunden wird. Dieser Arbeitsvorgang kann vollautomatisiert erfolgen.

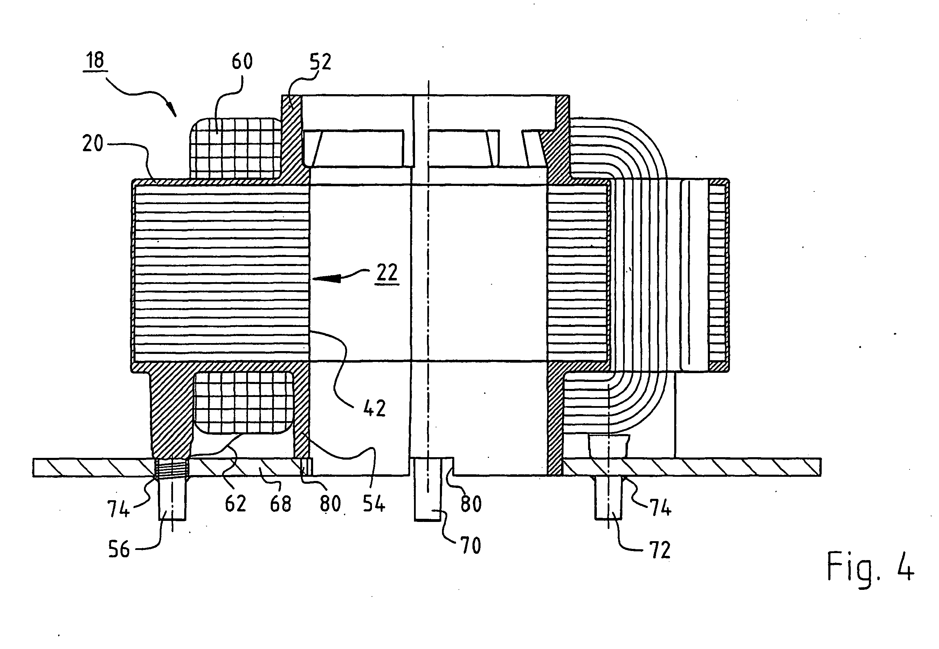

**Fig. 4** zeigt einen Schnitt durch das komplett bewickelte Statorblechpaket 22 und die Leiterplatte 68, in welche insgesamt drei Kunststoff-Befestigungsteile 56, 70 und 72 ragen. Das Lötzinn ist bei 74 angedeutet.

**Fig. 5B** zeigt die Leiterplatte 68 vor ihrer Montage am bewickelten Statorblechpaket 22. (Die Montage ist durch Pfeile 69 symbolisch angedeutet.) Die Leiterplatte 68 hat drei Ausnehmungen 58', 70' und 72' zur Aufnahme der drei Befestigungsteile 58, 70 und 72. Ferner hat sie in ihrer Mitte eine Ausnehmung 76, in die drei Vorsprünge 78 ragen, welche zur Führung der Leiterplatte 68 an entsprechenden Aussparungen 80 des Kragens 52 dienen und unsymmetrisch verteilt sind, um Fehler bei der Montage auszuschließen. Auf der Leiterplatte 68 ist ein Hallsensor 82 angeordnet, der durch das Streufeld des Rotormagneten 24 gesteuert wird und dazu dient, die elektronische Kommutierung zu steuern.

**Fig. 5A** zeigt die beiden Wicklungsstränge 86, 88 der beispielhaft dargestellten Motorbauart. Diese sind in der üblichen Weise bifilar, also mit zwei parallelen Drähten, gewickelt und haben einen gemeinsamen Anschluss 90, der mit dem Kunststoff-Befestigungsteil 70 mechanisch verbunden ist. Von diesem geht der Strang 86 im Uhrzeigersinn bis zu seinem Ende 86E, das mit dem Befestigungsteil 58 mechanisch verbunden ist. Ebenso geht vom Anschluss 90 der Strang 88 entgegen dem Uhrzeigersinn bis zu seinem Ende 88E, das mit dem Befestigungsteil 72 mechanisch verbunden ist. Durch das Verlöten mit der Leiterplatte 68 werden anschließend die Stränge 86, 88 elektrisch mit entsprechenden, nicht dargestellten Leiterbahnen der Leiterplatte 68 verbunden. Die Ströme durch die Stränge 86, 88 werden in bekannter Weise, abhängig von der Stellung des Rotors 24, durch den Hallsensor 82 gesteuert. Alternativ ist eine Steuerung nach dem so genannten Sensorless-Prinzip möglich.

Im Bereich der Kunststoff-Befestigungsteile 58, 70, 72 befindet sich jeweils eine Schutzwand 94 (Fig. 6 und 7), welche etwa V-förmig verläuft und in ihrer Mitte eine Vertiefung 96 aufweist, aus der das betreffende Kunststoff-Befestigungsteil 58, 70 bzw. 72 heraus ragt. Die Schutzwände 94 haben zwei Funktionen:
a) Auflage- und Distanzglieder bei der Montage an der Leiterplatte 68.
b) Mechanischer Schutz gegen Beschädigung der Befestigungsteile 58, 70, 72.

**Fig. 6** zeigt, dass dort auch in der Drei-Uhr-Stellung, an der bei diesem Beispiel kein Befestigungsteil notwendig ist, solche Schutzwände 94 vorgesehen sind. Sie sind, ebenso wie die Befestigungsteile 58, 70, 72, aus dem Werkstoff der Isolierschicht 20 ausgebildet.

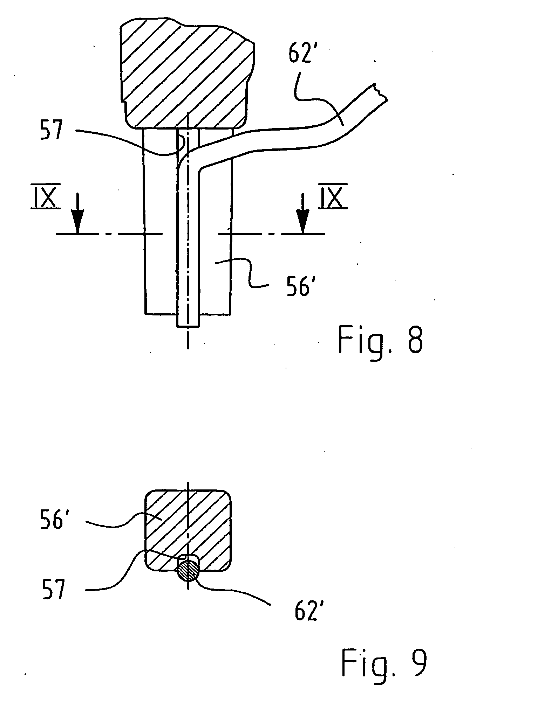

**Fig. 8 und 9** zeigen eine Variante, nämlich ein Kunststoff-Befestigungsteil 56', in welchem eine Längsnut 57 vorgesehen ist, in welcher ein Anschlussdraht 62' durch Einklemmen mechanisch befestigt ist. Dies ermöglicht die Befestigung dickerer Drähte, z.B. mit einem Durchmesser über 0,6 mm. Diese müssen dann nicht um das betreffende Befestigungsteil herum gewickelt werden.

**Fig. 10** zeigt eine Befestigung der Anschlussdrähte an Metallstiften 100 gemäß Stand der Technik. Diese Stifte sind in Bohrungen 102 einer Isolierschicht 104 eingepresst, eignen sich aber nur für sehr dünne Wickeldrähte bis ca. 0,25 mm Durchmesser, da sie durch eine zu große mechanische Belastung leicht beschädigt werden können.

Naturgemäß sind im Rahmen der vorliegenden Erfindung vielfache Abwandlungen und Modifikationen möglich.

## Patentansprüche

1. Verfahren zur Herstellung eines elektronisch kommutierten Elektromotors, welcher einen Innenstator (18) und einen Außenrotor (24) aufweist, die durch einen Luftspalt (23) voneinander getrennt sind,
welcher Innenstator (18) ein Blechpaket (22) aufweist, das mit einer Wicklungsanordnung (60; 86, 88) versehen ist, deren Anschlüsse (62; 62', 86E, 88E, 90) zumindest teilweise aus Draht ausgebildet sind,
und mit einer der Wicklungsanordnung zugeordneten Leiterplatte (68), welche mit Ausnehmungen (58', 70', 72') versehen ist,
weiches Verfahren folgende Schritte aufweist:
a) Das Blechpaket (22) des Innenstators (18) wird mindestens bereichsweise mit einer Isolierschicht (20) versehen, welche einen thermisch stabilen Kunststoff aufweist;
b) dabei werden an dieser Isolierschicht (20) Kunststoff-Befestigungsteile (56, 70, 72) ausgebildet, welche vom Innenstator (18) in Richtung zur Leiterplatte (68) ragen;
c) das mit der Isolierschicht (20) versehene Blechpaket (22) wird mit der Wicklungsanordnung (60, 86, 88) bewickelt;
d) ein Drahtabschnitt (62; 62', 86E, 88E, 90) der Wicklungsanordnung (60) wird an einem zugeordneten Kunststoff-Befestigungsteil (58) angebracht;
e) der Drahtabschnitt (62; 62', 86E, 88E, 90) wird verzinnt;
f) das Kunststoff-Befestigungsteil (58) mit dem daran angebrachten verzinnten Drahtabschnitt (62; 62', 86,E, 88E, 90) wird in eine zugeordnete Ausnehmung (58') der Leiterplatte (68) eingeführt;
g) der zusammen mit dem Kunststoff-Befestigungsteil (58) eingeführte Drahtabschnitt (62; 62', 86E, 88E, 90) wird mit der Leiterplatte (68) verlötet.

2. Verfahren nach Anspruch 1, bei welchem der Drahtabschnitt (62; 62', 86E, 88E, 90) um das zugeordnete Kunststoff-Befestigungsteil (58) herum gewickelt wird.

3. Verfahren nach einem der vorhergehenden Ansprüche, bei welchem das Blechpaket (22) in seinem dem Luftspalt (23) zugewandten Umfangsbereich (48) mit einer durchgehenden Isolierschicht (20) versehen wird.

4. Verfahren nach einem der vorhergehenden Ansprüche, bei welchem das Blechpaket (22) im Bereich eines Kunststoff-Befestigungsteils (56, 70, 72) mit mindestens einer Wand (94) versehen wird, welche einstückig mit der Isolierschicht (20) des Blechpakets (22) ausgebildet ist.

5. Verfahren nach Anspruch 4, bei welchem das Blechpaket (22) im Bereich eines Kunststoff-Befestigungsteils (56, 70, 72) mit zwei Wänden (94) versehen wird, welche von einer Vertiefung (96) ausgehen, in welcher Vertiefung dieses Kunststoff-Befestigungstei) (58, 70, 72) angeordnet ist.

6. Verfahren nach Anspruch 4 oder 5, bei welchem sich die Wand (94) im Wesentlichen im Bereich zwischen dem Blechpaket (22) und der Leiterplatte (68) erstreckt.

7. Verfahren nach einem der vorhergehenden Ansprüche, bei welchem die Isolierschicht (20) und das mindestens eine Kunststoff-Befestigungsteil (58, 70, 72) aus einem thermisch stabilen Kunststoff hergestellt wird, dem ein Füllmaterial, insbesondere aus der Gruppe von Glasfasern und Glimmer, beigefügt ist.

8. Verfahren nach einem der vorhergehenden Ansprüche, bei welchem als hochtemperaturbeständiger Kunststoff zumindest überwiegend ein flüssigkristallines Polymer verwendet, wird.

9. Verfahren nach Anspruch 8, bei welchem dem flüssigkristallinen Polymer Glasfasern oder dergleichen beigemengt sind.

10. Verfahren nach einem der vorhergehenden Ansprüche, bei welchem das Blechpaket (22) Nuten (34, 36, 38, 40) aufweist, deren Inneres mit einer Isolierschicht (20N) aus dem flüssigkristallinen Polymer versehen wird.

11. Elektronisch kommutierter Elektromotor, welcher einen Innenstator (18) und einen Außenrotor (24) aufweist, die durch einen Luftspalt (23) voneinander getrennt sind,
welcher Innenstator (18) ein Blechpaket (22) aufweist, das mindestens bereichsweise mit einer Isolierschicht (20) versehen ist, welche einen thermisch stabilen Kunststoff aufweist und mit einer Wicklungsanordnung (60, 86, 88) bewickelt ist, deren Anschlüsse zumindest teilweise als Drahtabschnitte (62; 62'; 86E, 88E, 90) ausgebildet sind,
und mit einer der Wicklungsanordnung (60, 86, 88) zugeordneten Leiterplatte (68), welche mit Ausnehmungen (58', 70', 72') versehen ist, wobei an der am Blechpaket (22) vorgesehenen Isolierschicht (20) Kunststoff-Befestigungsteile (56, 70, 72) ausgebildet sind, welche vom Innenstator (18) in Richtung zur Leiterplatte (68) ragen und an welchen die Drahtabschnitte (62; 62'; 86E, 88E, 90) angebracht sind, **dadurch gekennzeichnet, dass** die Befestigungsteile (56, 70, 72) mit den daran angebrachten verzinnten Drahtabschnitten jeweils in einer zugeordneten Ausnehmung (58', 70', 72') der Leiterplatte (68) angeordnet und dort mit der Leiterplatte (68) verlötet sind.

12. Motor nach Anspruch 11, bei welchem ein Drahtabschnitt (62; 86E, 88E, 90) um das zugeordnete Kunststoff-Befestigungsteil (58, 70, 72) herum gewickelt ist.

13. Motor nach Anspruch 11, bei welchem ein Drahtabschnitt (62') im Wesentlichen parallel zur Längsrichtung eines zugeordneten Befestigungsteils (58) verläuft und an letzterem zumindest vorübergehend mechanisch befestigt ist.

14. Motor nach einem der Ansprüche 11 bis 13, bei welchem das Blechpaket (22) in seinem dem Luftspalt (23) zugewandten Umfangsbereich (48) mit einer durchgehenden Schicht (20) aus dem thermisch stabilen Kunststoff versehen ist.

15. Motor nach Anspruch 14, bei welchem die durchgehende Schicht (20) eine mittlere Schichtdicke von weniger als 0,5 mm und bevorzugt von etwa 0,2 mm aufweist.

16. Motor nach einem der Ansprüche 11 bis 15, bei welchem das Blechpaket (22) im Bereich eines Befestigungsteils (56, 70, 72) mindestens eine Wand (94) aufweist, welche einstückig mit der Isolierschicht (20) des Blechpakets (22) ausgebildet ist und von letzterem weg ragt.

17. Motor nach Anspruch 16, bei welchem das Blechpaket (22) im Bereich eines Befestigungsteils (56, 70, 72) zwei Wände (94) aufweist, welche von einer Vertiefung (96) ausgehen, in welcher mindestens ein Befestigungsteil (58, 70, 72) angeordnet ist.

18. Motor nach Anspruch 16 oder 17, bei welchem sich die mindestens eine Wand (94) im Wesentlichen im Bereich zwischen dem Blechpaket (22) und der Leiterplatte (68) erstreckt.

19. Motor nach einem der Ansprüche 11 bis 18, bei welchem die Isolierschicht (20) und das mindestens eine Befestigungsteil (58, 70, 72) im Wesentlichen aus einem thermisch stabilen Kunststoff bestehen, dem zur Erhöhung einer Festigkeit ein Füllmaterial beigefügt ist.

20. Motor nach einem der Ansprüche 11 bis 19, bei welchem die Isolierschicht (20) zumindest überwiegend aus einem flüssigkristallinen Polymer besteht.

21. Motor nach Anspruch 20, bei welchem dem flüssigkristallinen Polymer Glasfasern beigemengt sind.

22. Motor nach einem der Ansprüche 11 bis 21, bei welchem das Blechpaket (22) Nuten (34, 36, 38, 40) aufweist, deren Innenseite mit einer Isolierschicht (20N) aus dem flüssigkristallinen Polymer (20) beschichtet ist.

## Claims

1. Method of producing an electronically commutated electric motor, having an inner stator (18) and an outer rotor (24) which are separated from each other by an air gap (23),
which inner stator (18) has a laminated core (22), which is provided with a winding arrangement (60; 86, 88), the terminals (62; 62', 86E, 88E, 90) of which are made at least partly of wire,
and with a printed circuit board (68), which is assigned to the winding arrangement, and which is provided with recesses (58', 70', 72'),
which method has the following steps:
a) the laminated core (22) of the inner stator (18) is provided at least in regions with an insulating layer (20), which has a thermally stable plastic;
b) on this insulating layer (20), plastic fixing parts (56, 70, 72), extending from the inner stator (18) in the direction of the printed circuit board (68), are formed;
c) the winding arrangement (60, 86, 88) is wound around the laminated core (22), which is provided with the insulating layer (20);
d) a wire section (62; 62', 86E, 88E, 90) of the winding arrangement (60) is attached to an assigned plastic fixing part (58);
e) the wire section (62; 62', 86E, 88E, 90) is tin-plated;
f) the plastic fixing part (58), with the tin-plated wire section (62; 62', 86E, 88E, 90) attached to it, is inserted into an assigned recess (58') of the printed circuit board (68);
g) the wire section (62; 62', 86E, 88E, 90), which is inserted together with the plastic fixing part (58), is soldered to the printed circuit board (68) .

2. Method according to Claim 1, wherein the wire section (62; 62', 86E, 88E, 90) is wound around the assigned plastic fixing part (58).

3. Method according to one of the preceding claims, wherein the laminated core (22) , in its periphery (48) facing the air gap (23), is provided with a continuous insulating layer (20).

4. Method according to one of the preceding claims, wherein the laminated core (22), in the region of a plastic fixing part (56, 70, 72), is provided with at least one wall (94), which is made in one piece with the insulating layer (20) of the laminated core (22).

5. Method according to Claim 4, wherein the laminated core (22), in the region of a plastic fixing part (56, 70, 72), is provided with two walls (94), which start from an indentation (96), in which this plastic fixing part (58, 70, 72) is arranged.

6. Method according to Claim 4 or 5, wherein the wall (94) essentially extends in the region between the laminated core (22) and the printed circuit board (68).

7. Method according to one of the preceding claims, wherein the insulating layer (20) and the at least one plastic fixing part (58, 70, 72) are produced from a thermally stable plastic, to which a filling material, in particular from the group of glass fibres and mica, is added.

8. Method according to one of the preceding claims, wherein, as the high-temperature-resistant plastic, at least mainly a liquid crystal polymer is used.

9. Method according to Claim 8, wherein glass fibres or similar are mixed into the liquid crystal polymer.

10. Method according to one of the preceding claims, wherein the laminated core (22) has grooves (34, 36, 38, 40), the inside of which is provided with an insulating layer (20N) of the liquid crystal polymer.

11. Electronically commutated electric motor, having an inner stator (18) and an outer rotor (24) which are separated from each other by an air gap (23), which inner stator (18) has a laminated core (22), which is provided at least in regions with an insulating layer (20), which has a thermally stable plastic, and around which a winding arrangement (60, 86, 88), the terminals of which are at least partly in the form of wire sections (62; 62', 86E, 88E, 90), is wound,
and with a printed circuit board (68), which is assigned to the winding arrangement (60, 86, 88), and which is provided with recesses (58', 70', 72'),
plastic fixing parts (56, 70, 72), which extend from the inner stator (18) in the direction of the printed circuit board (68), and to which the wire sections (62; 62', 86E, 88E, 90) are attached, being formed on the insulating layer (20) which is provided on the laminated core (22),
**characterized in that**
the fixing parts (56, 70, 72), with the tin-plated wire sections attached to them, are each arranged in an assigned recess (58', 70', 72') of the printed circuit board (68), and soldered to the printed circuit board (68) there.

12. Motor according to Claim 11, wherein a wire section (62; 86E, 88E, 90) is wound around the assigned plastic fixing part (58, 70, 72).

13. Motor according to Claim 11, wherein a wire section (62') runs essentially parallel to the longitudinal direction of an assigned fixing part (58), and is at least transiently fixed to the latter mechanically.

14. Motor according to one of Claims 11 to 13, wherein the laminated core (22), in its periphery (48) facing the air gap (23), is provided with a continuous insulating layer (20) of the thermally stable plastic.

15. Motor according to Claim 14, wherein the continuous layer (20) has a mean layer thickness of less than 0.5 mm, and preferably of about 0.2 mm.

16. Motor according to one of Claims 11 to 15, wherein the laminated core (22), in the region of a fixing part (56, 70, 72), has at least one wall (94), which is made in one piece with the insulating layer (20) of the laminated core (22) and extends away from it.

17. Motor according to Claim 16, wherein the laminated core (22), in the region of a fixing part (56, 70, 72), has two walls (94), which start from an indentation (96), in which at least one fixing part (58, 70, 72) is arranged.

18. Motor according to Claim 16 or 17, wherein the at least one wall (94) essentially extends in the region between the laminated core (22) and the printed circuit board (68).

19. Motor according to one of Claims 11 to 18, wherein the insulating layer (20) and the at least one fixing part (58, 70, 72) essentially consist of a thermally stable plastic, to which a filling material is added to increase strength.

20. Motor according to one of Claims 11 to 19, wherein the insulating layer (20) consists at least mainly of a liquid crystal polymer.

21. Motor according to Claim 20, wherein glass fibres are mixed into the liquid crystal polymer.

22. Motor according to one of Claims 11 to 21, wherein the laminated core (22) has grooves (34, 36, 38, 40), the inside of which is coated with an insulating layer (20N) of the liquid crystal polymer (20).

## Revendications

1. Procédé de fabrication d'un moteur électrique à commutation électronique, lequel présente un stator intérieur (18) et un rotor extérieur (24) qui sont séparés l'un de l'autre par un entrefer (23),
lequel stator intérieur (18) présente un empilage ou paquet de tôles (22) qui est pourvu d'un agencement d'enroulements (60 ; 86, 88) dont les connexions (62 ; 62', 86E, 88E, 90) sont formées au moins partiellement de fil métallique,
et avec une carte de circuits imprimés (68) associée à l'agencement d'enroulements, laquelle est pourvue d'évidements (58', 70', 72'),
lequel procédé présente les étapes suivantes :
a) l'empilage ou paquet de tôles (22) du stator intérieur (18) est pourvu au moins en partie d'une couche isolante (20) qui présente une matière plastique thermiquement stable ;
b) sur cette couche isolante (20) sont formées des pièces de fixation en matière plastique (56, 70, 72) qui font saillie du stator intérieur (18) en direction de la carte de circuits imprimés (68) ;
c) l'empilage ou paquet de tôles (22) muni de la couche isolante (20) est bobiné avec l'agencement d'enroulements (60, 86, 88) ;
d) une portion de fil (62 ; 62', 86E, 88E, 90) de l'agencement d'enroulements (60) est appliquée sur une pièce de fixation en matière plastique (58) associée ;
e) la portion de fil (62 ; 62', 86E, 88E, 90) est étamée ;
f) la pièce de fixation en matière plastique (58) avec la portion de fil étamée (62 ; 62', 86E, 88E, 90) appliquée dessus est introduite dans un évidement associé (58') de la carte de circuits imprimés (68) ;
g) la portion de fil (62; 62', 86E, 88E, 90) introduite conjointement avec la pièce de fixation en matière plastique (58) est soudée avec la carte de circuits imprimés (68).

2. Procédé selon la revendication 1, dans lequel la portion de fil (62 ; 62', 86E, 88E, 90) est bobinée autour de la pièce de fixation en matière plastique (58) associée.

3. Procédé selon l'une des revendications précédentes, dans lequel l'empilage ou paquet de tôles (22) est pourvu d'une couche isolante (20) continue dans sa zone périphérique (48) tournée vers l'entrefer (23).

4. Procédé selon l'une des revendications précédentes, dans lequel l'empilage ou paquet de tôles (22) est pourvu dans la zone d'une pièce de fixation en matière plastique (56, 70, 72) d'au moins une paroi (94) qui est formée d'une seule pièce avec la couche isolante (20) de l'empilage ou paquet de tôles (22).

5. Procédé selon la revendication 4, dans lequel l'empilage ou paquet de tôles (22) est pourvu dans la zone d'une pièce de fixation en matière plastique (56, 70, 72) de deux parois (94) qui partent d'un renfoncement (96), dans lequel renfoncement cette pièce de fixation en matière plastique (58, 70, 72) est disposée.

6. Procédé selon la revendication 4 ou 5, dans lequel la paroi (94) s'étend essentiellement dans la zone comprise entre l'empilage ou paquet de tôles (22) et la carte de circuits imprimés (68).

7. Procédé selon l'une des revendications précédentes, dans lequel la couche isolante (20) et ladite au moins une pièce de fixation en matière plastique (58, 70, 72) sont réalisées dans une matière plastique thermiquement stable à laquelle est ajoutée une matière de remplissage, en particulier issue du groupe des fibres de verre et du mica.

8. Procédé selon l'une des revendications précédentes, dans lequel on utilise au moins principalement un polymère à cristaux liquides comme matière plastique résistante aux températures élevées.

9. Procédé selon la revendication 8, dans lequel des fibres de verre ou analogues sont ajoutées au polymère à cristaux liquides.

10. Procédé selon l'une des revendications précédentes, dans lequel l'empilage ou paquet de tôles (22) présente des encoches (34, 36, 38, 40) dont l'intérieur est pourvu d'une couche isolante (20N) composée du polymère à cristaux liquides.

11. Moteur électrique à commutation électronique, lequel présente un stator intérieur (18) et un rotor extérieur (24) qui sont séparés l'un de l'autre par un entrefer (23), lequel stator intérieur (18) présente un empilage ou paquet de tôles (22) qui est pourvu au moins en partie d'une couche isolante (20) qui présente une matière plastique thermiquement stable et est bobiné avec un agencement d'enroulements (60, 86, 88) dont les connexions sont réalisées au moins partiellement sous la forme de portions de fil (62 ; 62' ; 86E, 88E, 90),
et avec une carte de circuits imprimés (68) associée à l'agencement d'enroulements (60, 86, 88), laquelle est pourvue d'évidements (58', 70', 72'), des pièces de fixation en matière plastique (56, 70, 72) étant formées sur la couche isolante (20) prévue sur l'empilage ou paquet de tôles (22), lesquelles font saillie du stator intérieur (18) en direction de la carte de circuits imprimés (68) et sur lesquelles sont appliquées les portions de fil (62 ; 62' ; 86E, 88E, 90),
**caractérisé en ce que** les pièces de fixation (56, 70, 72) avec les portions de fil étamées appliquées dessus sont chaque fois disposées dans un évidement (58', 70', 72') associé de la carte de circuits imprimés (68) et y sont soudées avec la carte de circuits imprimés (68).

12. Moteur selon la revendication 11, dans lequel une portion de fil (62 ; 86E, 88E, 90) est bobinée autour de la pièce de fixation en matière plastique (58, 70, 72) associée.

13. Moteur selon la revendication 11, dans lequel une portion de fil (62') s'étend essentiellement parallèlement à la direction longitudinale d'une pièce de fixation (58) associée et est fixée à cette dernière au moins provisoirement mécaniquement.

14. Moteur selon l'une des revendications 11 à 13, dans lequel l'empilage ou paquet de tôles (22) est pourvu d'une couche continue (20) de la matière plastique thermiquement stable dans sa zone périphérique (48) tournée vers l'entrefer (23).

15. Moteur selon la revendication 14, dans lequel la couche continue (20) présente une épaisseur de couche moyenne inférieure à 0,5 mm et de préférence d'environ 0,2 mm.

16. Moteur selon l'une des revendications 11 à 15, dans lequel l'empilage de tôles (22) présente dans la zone d'une pièce de fixation (56, 70, 72) au moins une paroi (94) qui est formée d'une seule pièce avec la couche isolante (20) de l'empilage de tôles (22) ou paquet et fait saillie dans la direction l'éloignant de ce dernier.

17. Moteur selon la revendication 16, dans lequel l'empilage de tôles ou paquet (22) présente dans la zone d'une pièce de fixation (56, 70, 72) deux parois (94) qui partent d'un renfoncement (96) dans lequel au moins une pièce de fixation (58, 70, 72) est disposée.

18. Moteur selon la revendication 16 ou 17, dans lequel ladite au moins une paroi (94) s'étend essentiellement dans la zone comprise entre l'empilage ou paquet de tôles (22) et la carte de circuits imprimés (68).

19. Moteur selon l'une des revendications 11 à 18, dans lequel la couche isolante (20) et ladite au moins une pièce de fixation (58, 70, 72) sont essentiellement composées d'une matière plastique thermiquement stable à laquelle est ajoutée une matière de remplissage pour augmenter sa résistance ou solidité mécanique.

20. Moteur selon l'une des revendications 11 à 19, dans lequel la couche isolante (20) est composée au moins principalement d'un polymère à cristaux liquides.

21. Moteur selon la revendication 20, dans lequel des fibres de verre sont ajoutées au polymère à cristaux liquides.

22. Moteur selon l'une des revendications 11 à 21, dans lequel l'empilage ou paquet de tôles (22) présente des encoches (34, 36, 38, 40) dont le côté intérieur est pourvu d'une couche isolante (20N) composée du polymère à cristaux liquides (20).
